# EUROPÄISCHE PATENTSCHRIFT

(11) **EP 0 723 008 B1**
(45) Veröffentlichungstag und Bekanntmachung des Hinweises auf die Patenterteilung: **08.11.2000**
(21) Anmeldenummer: 96100506.3
(22) Anmeldetag: 16.01.1996
(51) Int. Cl.: C11D 7/50, C11D 7/22, C09D 9/00

(54) **Verfahren zur Reinigung von Geräten und Gerätereiniger zur Durchführung des Verfahrens**
Process for cleaning of utensils and utensil-cleaner for realization of this process
Procédé pour nettoyer les utensiles et détersion mise en oeuvre d'un procédé

(30) Priorität: 20.01.1995 DE 19501661
(43) Veröffentlichungstag der Anmeldung: 24.07.1996
(73) Patentinhaber: E.I. DU PONT DE NEMOURS AND COMPANY, Wilmington Delaware 19898 (US)
(72) Erfinder: Stricker, Wolfgang, D-42897 Remscheid (DE); Hellmann, Udo, D-42897 Remscheid (DE); Stephan, Werner, D-42111 Wuppertal (DE)
(74) Vertreter: Gille Hrabal Struck Neidlein Prop Roos

(56) Entgegenhaltungen:
- DE-A- 3 534 278
- DE-A- 4 405 196
- US-A- 4 309 300
- US-A- 4 965 010
- US-A- 5 443 748
- DATABASE WPIL, No. 95-041 580, Derwent Publications Ltd., London; & JP-A-63 022 393 (NIPPON BAZU KK)

## Beschreibung

Die Erfindung betrifft ein Verfahren zur Reinigung von mit Lackresten verschmutzten Geräten, bei dem die Lackreste mit einem Lösemittelgemisch entfernt werden, und einen lösemittelbasierenden Gerätereiniger, welcher bei Lackierarbeiten zur Reinigung bzw. Entfernung von Lackresten von beispielsweise Behältern, Spritzpistolen und ähnlichem Anwendung findet. Der Gerätereiniger kann bei der Verarbeitung von sowohl lösamittelbasierenden als auch wasserverdünnbaren Lackmaterialien eingesetzt werden.

Bei Lackierarbeiten, beispielsweise in der Fahrzeuglackierung oder anderen industriellen Einsatzgebieten, ist es erforderlich, nach dem Lackieren und auch bei einem Farbtonwechsel oder einem Wechsel in der Art des zu applizierenden Lackmaterials die Applikationsgeräte, wie insbesondere Spritzpistolen, gründlich zu reinigen.

Dazu wird als erstes der Lack aus der Pistole entleert. Anschließend wird in den Becher etwas Waschverdünnung gegeben und die Pistole durchgeblasen. Dieser Vorgang wird wiederholt, bis aus der Düsenöffnung nur noch reine Verdünnung austritt. Danach wird die Pistole mit einem fusselfreien Lappen saubergewischt. Für eine Grundreinigung wird die Spritzpistole teilweise zerlegt und die Einzelbestandteile werden mit Waschverdünnung gereinitgt ("Die Autolackierung", Vogel Buchverlag, Würzburg, 4. Auflage 1988, Seite 128, Hauber, Mitz und Puchhahn).

Neben dieser manuellen Arbeitsweise besteht auch die Möglichkeit, die zerlegte Spritzpistole in speziellen Reinigungsautomaten zu reinigen (z.B. in einer Drestler-Muschel).

Bei der Verarbeitung der bisher üblicherweise eingesetzten lösemittelbasierenden Lacke finden als Waschverdünnung beispielsweise Aromaten, wie Toluol, Xylol und Ester, wie Ethylacetat, Isopropylacetat, isobutylacetat, n-Butylacetat und Benzinfraktionen mit einem Flammpunkt unter 21°C Anwendung. So werden beispielsweise in der DE-A-44 05 196 Reinigungslösungen zur Reinigung von Lackierwerkzeugen beschrieben, die bei 20°C einen Dampfdruck von maximal 3 mbar aufweisen und 5 - 60 Gew.-% aromatische Kohlenwasserstoffe sowie 40 - 95 Gew.-% weitere Lösemittel, ausgewählt aus der Gruppe der Ester, Kezone, Etherester, Alkohole und/oder Etheralkhole, enthalten.

In der JP-A-63022393 wird eine Reinigungszusammensetzung mit einem Gehalt von 5 bis 20 Gew.-% eines bis zu C₈-Glykolethers, 5 bis 30 Gew.-% eines C₅₋₉ Ketons und 50-90 Gew.-% eines C₈₋₁₂ Kohlenwasserstoffs beschrieben. Diese weisen eine erhöhte Sicherheit bezüglich der Entflamm- uns Entzündungsgefahr auf und werden daher zur Innenreinigung des Ansaugsystems von Kraftfahrzeugmotoren mit einem elektronischen Kraftstoffansaugsystem verwendet. Die US-A-4,309,300 beschreibt Lösemittelgemische, die zur Entfernung von durch Ultraviolettlicht veränderten Lackoberflächen verwendet werden, ohne den Lack als solchen zu entfernen. Diese Zusammensetzungen enthalten 15-50 Vol.-% Glykolether, 5-15 Vol.-% Alkohol, 3-11 Vol.-% Keton und 24-77 Vol.-% Wasser.

Aus ökologischen Gründen geht man heute dazu über, verstärkt wasserbasierende Lackmaterialien einzusetzen. Beim Einsatz wasserverdünnbarer Lacke können jedoch die üblicherweise eingesetzten Reinigungsmittel nicht verwendet werden. Kommen wasserverdünnbare Lackreste mit den vorstehend genannten üblichen Reinigungslösemitteln in Berührung, so kommt es zu Koagulationserscheinungen, die wasserverdünnbaren Produkte fallen aus. Für Wasserlacke müssen daher andere Lösemittel, nämlich wassermischbare bzw. wasserlösliche, zur Reinigung eingesetzt werden. Diese Lösemittel sind wiederum für lösemittelbasierende Lacke nicht geeignet. Es kommt hier ebenfalls zu den genannten Koagulationserscheinungen.

Das heißt, werden lösemittelbasierende und Wasserlacke nebeneinander verarbeitet, so sind zwei jeweils auf die beiden Systeme abgestimmte Reinigungsflüssigkeiten erforderlich und im Falle der Reinigung mittels Reinigungsautomat müssen auch zwei dieser Reinigungsautomaten vorhanden sein.

Aufgabe der Erfindung war es daher, ein Verfahren zur Reinigung von mit Lackresten verschmutzten Geräten und einen Gerätereiniger zur Durchführung des Verfahrens zu finden, die universell für Lackmaterialien auf Wasserbasis und auf Lösemittelbasis eingesetzt werden können.

Diese Aufgabe wurde gelöst durch ein Verfahren der eingangs genannten Art, das dadurch gekennzeichnet ist, daß als Lösemittelgemisch ein solches verwendet wird, das
A) 15 - 35 Gew.-% eines oder mehrerer Glykolether der allgemeinen Formel I

   OH - (CH₂ - CH₂ - O)ₘ - R₁ I

   wobei R₁ = C₁₋₄-Alkyl und m = 1 oder 2 bedeuten und
B) 65 - 85 Gew.-% eines oder mehrerer aliphatischer Ketone der allgemeinen Formel II 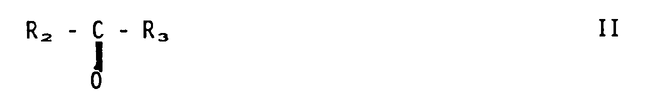 wobei R₂ = C₁₋₃- Alkyl und R₃ = C₁₋₃-Alkyl bedeuten und R₂ und R₃ gleich oder verschieden sein können, enthält, wobei sich A) + B) zu 100 Gew.-% addieren.

Gegenstand der Erfindung ist auch ein Gerätereiniger auf Basis eines Lösemittelgemisches zur Durchführung des Verfahrens, der dadurch gekennzeichnet ist, daß er
A) 15 - 35 Gew.-% eines oder mehrerer Glykolether der allgemeinen Formel I

   OH - (CH₂ - CH₂ - O)ₘ - R₁ I

   wobei R₁ = C₁₋₄-Alkyl und m = 1 oder 2 bedeuten und
B) 65 - 85 Gew.-% eines oder mehrerer aliphatischer Ketone der allgemeinen Formel II 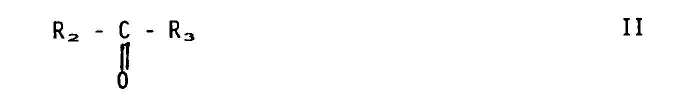 wobei R₂ = C₁₋₃- Alkyl und R₃ = C₁₋₃-Alkyl bedeuten und R₂ und R₃ gleich oder verschieden sein können, enthält, wobei sich A) + B) zu 100 Gew.-% addieren.

Überraschend wurde gefunden, daß mit dem erfindungsgemäßen Lösemittelgemisch sowohl lösemittelbasierende als auch wasserverdünnbare Lackreste gut gelöst werden können und die Reinigungswirkung universell auch bei den verschiedensten Lackmaterialien, wie Primer, Füller, Basislack, Decklack, gleich gut entfaltet wird.

Bei der Komponente A) des erfindungsgemäßen Reinigungsmittels handelt es sich um Glykolether der vorstehend genannten allgemeinen Formel I. Beispiele für derartige Glykolether sind Methylglykol, Ethylglykol, Butylglykol, Methyldiglykol, Ethyldiglykol, Butyldiglykol. Bevorzugt sind Methyldiglykol und Butyldiglykol.

Bei der Komponente B) des erfindungsgemäßen Reinigungsmittels handelt es sich um aliphatische Ketone der allgemeinen Formel II. Beispiele für diese Ketone sind Aceton, Diethylketon, Diisobutylketon, Methylethylketon, Methyl-n-propylketon. Bevorzugt sind Aceton und Methylethylketon.

Der erfindungsgemäße Gerätereiniger kann zur Reinigung von Spritzpistolen, Behältern und ähnlichem, welche durch wasserverdünnbare oder lösemittelbasierende Lackreste verunreinigt sind, eingesetzt werden. Es handelt sich dabei um einen Universalreiniger, der für die verschiedensten Lackmaterialien eine gleich gute Reinigungswirkung zeigt. Die Beseitigung bzw. das Entfernen der Lackreste im Reinigungsautomaten erfolgt allein durch die Reinigungswirkung des erfindungsgemäßen Lösemittelgemisches, zusätzliche Operationen, wie z.B. das Arbeiten mit einem Pinsel, sind nicht erforderlich.

Als verschiedene Lackmaterialien seien beispielhaft genannt: Steinschlagschutz, PE-Spritzplastic, Plastic-Primer, 1K-Primer, Plastic-Füller, 2K-Füller, 1K-Hydrofüller, Basislack, Wasserbasislack, 2K-Decklack, Wasserdecklack. Die genannten Überzugsmittel können dabei auf allen bekannten und für das spezielle Überzugsmittel gebräuchlichen Bindemitteln beruhen. Beispielhaft genannt seien Alkyd-, Polyurethan-, Polyurethan-Harnstoff-, Polyester-, Polyacrylatbindemittel, Epoxidharze, kombinierbar mit verschiedenen Vernetzern wie Polyisocyanaten (gegebenenfalls blockiert), Aminoplastharzen, Polyaminen, Umesterungsvernetzern.

Bei der Reinigung von mit Wasserlacken verunreinigten Geräten ist es vorteilhaft, die Geräte zunächst mit Wasser vorzureinigen und anschließend den erfindungsgemäßen Gerätereiniger einzusetzen. Verunreinigungen aus lösemittelbasierenden Lacken können direkt mit dem erfindungsgemäßen Reiniger entfernt werden.

Die Erfindung soll anhand von Beispielen dargestellt werden.

### Beispiele 1 und 2 und Vergleichsbeispiele 3 - 8

Es werden Lösemittelgemische aus 75 Gew.-% Aceton und 25 Gew.-% Methyldiglykol bzw. Butyldiglykol hergestellt. Zum Vergleich werden entsprechend Tabelle 1 (Spalte 3 - 8) weitere Lösemittelgemische hergestellt. In Tabelle 2 werden Lösevermögen und Mischbarkeit der einzelnen Lösemittelgemische für verschiedene Lackmaterialien beurteilt.

**Tabelle 1**

| Mischung | | | | | | | | |
|---|---|---|---|---|---|---|---|---|
| Lösemittel | 1 | 2 | 3 | 4 | 5 | 6 | 7 | 8 |
| Aceton | 75 | 75 | 75 | 75 | 33 | 75 | | |
| Methylketon | | | | | | | 33 | |
| Methyldiglykol | 25 | | | | | | | |
| Butyldiglykol | | 25 | | | | | | |
| Butylacetat | | | | | 33 | | 33 | 33 |
| Xylol | | | | 25 | | | 34 | |
| Isopropanol | | | | | 34 | | | |
| NMP | | | 25 | | | | | |
| Butyrolacton | | | | | | 25 | | |
| Butylglykol | | | | | | | | 33 |
| Wasser | | | | | | | | 34 |

**Tabelle 2**

| Mischbarkeit und Lösevermögen | | | | | | | | |
|---|---|---|---|---|---|---|---|---|
| Überzugsmittel | 1 | 2 | 3 | 4 | 5 | 6 | 7 | 8 |
| lösemittelhaltig | | | | | | | | |
| 1K-Primer | i.O. | i.O. | i.O. | i.O. | i.O. | i.O. | i.O. | i.O. |
| 2K-Füller | i.O. | i.O. | i.O. | i.O. | i.O. | i.O. | i.O. | i.O. |
| 2K-Decklack | i.O. | i.O. | i.O. | i.O. | i.O. | i.O. | i.O. | i.O. |
| 2K-Epoxi-Füller | i.O. | i.0. | i.O. | i.O. | i.O. | i.0. | i.O. | i.O. |
| PE-Spritzplastic | i.O. | i.O. | i.0. | i.O. | i.O. | i.O. | i.O. | n.i.O |
| Plastic-Primer | i.O. | i.O. | i.O. | i.O. | i.O. | i.O. | i.O. | n.i.O |
| Plastic-Füller | i.O. | i.O. | i.O. | i.O. | i.O. | i.O. | i.O. | n.i.O |
| 2K-Plastic-Füller | i.O. | i.O. | i.O. | i.O. | i.O. | i.O. | i.O. | i.O. |
| wasserverdünnbar | | | | | | | | |
| 1K-Hydrofüller | i.O. | i.O. | n.iO | n.iO | n.i.O | n.i. O | n.i. O | n.i.O |
| 2K-Hydrofüller | i.O. | i.O. | i.O. | i.O. | n.i.O | i.O. | n.i. O | n.i.O |
| Hydrodecklack | i.O. | i.O. | i.O. | i.O. | i.O. | i.O. | n.i. O | i.O. |
| Hydrobasislack | i.O. | i.O. | i.O. | n.iO | i.O. | i.O. | n.i. O | i.O. |
| Steinschlagschutz | i.O. | i.O. | n.iO | n.iO | n.i.O | n.i. O | n.i. O | n.i.O |
| i.O. = in Ordnung | | | | | | | | |
| n.i.O. = nicht in Ordnung. | | | | | | | | |

Die Tabelle 2 zeigt, daß eine Vielzahl von Lösemittelgemischen zur Entfernung verschiedener Lackverunreinigungen geeignet ist. Überraschenderweise sind aber nur die erfindungsgemäßen Lösemittelgemische universell zur Reinigung bei allen genannten lösemittelhaltigen und wasserverdünnbaren Lacken einsetzbar.

## Patentansprüche

1. Verfahren zur Reinigung von mit Lackresten verschmutzten Geräten, bei dem die Lackreste mit einem Lösemittelgemisch entfernt werden, dadurch gekennzeichnet, daß als Lösemittelgemisch ein solches verwendet wird, das
A) 15 - 35 Gew.-% eines oder mehrerer Glykolether der allgemeinen Formel I
OH - (CH₂ - CH₂ - O)ₘ - R₁ I
wobei R₁ = C₁₋₄-Alkyl und m = 1 oder 2 bedeuten und
B) 65 - 85 Gew.-% eines oder mehrerer aliphatischer Ketone der allgemeinen Formel II 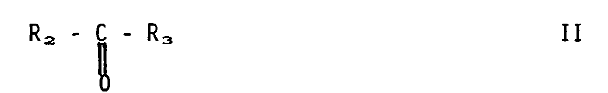 wobei R₂ = C₁₋₃- Alkyl und R₃ = C₁₋₃-Alkyl bedeuten und R₂ und R₃ gleich oder verschieden sein können, enthält, wobei A) + B) 100 Gew.-% ergeben.

2. Verfahren nach Anspruch 1, dadurch gekennzeichnet, daß als Komponente A Methyldiglykol und/oder Butyldiglykol verwendet werden.

3. Verfahren nach Anspruch 1 oder 2, dadurch gekennzeichnet, daß als Komponente B Aceton und/oder Methylethylketon verwendet werden.

4. Verfahren nach einem der Ansprüche 1 bis 3, dadurch gekennzeichnet, daß mit Resten von Wasserlacken verschmutzte Geräte mit Wasser vorgereinigt werden.

5. Gerätereiniger auf Basis eines Lösemittelgemisches zur Durchführung des Verfahrens nach einem der Ansprüche 1 bis 4, dadurch gekennzeichnet, daß er
A) 15 - 35 Gew.-% eines oder mehrerer Glykolether der allgemeinen Formel I
OH - (CH₂ - CH₂ - O)ₘ - R₁ I
wobei R₁ = C₁₋₄-Alkyl und m = 1 oder 2 bedeuten und
B) 65 - 85 Gew.-% eines oder mehrerer aliphatischer Ketone der allgemeinen Formel II 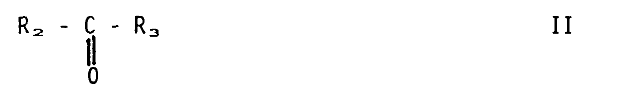 wobei R₂ = C₁₋₃- Alkyl und R₃ = C₁₋₃-Alkyl bedeuten und R₂ und R₃ gleich oder verschieden sein können, enthält, wobei A) + B) 100 Gew.-% ergeben.

6. Gerätereiniger nach Anspruch 5, dadurch gekennzeichnet, daß die Komponente A Methyldiglykol oder Butyldiglykol oder deren Mischung ist.

7. Gerätereiniger nach Anspruch 5 oder 6, dadurch gekennzeichnet, daß die Komponente B Aceton oder Methylethylketon oder deren Mischung ist.

## Claims

1. A process for cleansing equipment soiled with lacquer residues, in which the lacquer residues are removed with a solvent mixture, characterised in that a solvent mixture which contains
A) 15 - 35 wt.% of one or more glycol ethers of the general formula I
OH-(CH₂-CH₂-O)ₘ-R₁ I
wherein R₁ = C₁₋₄ alkyl and m = 1 or 2 and
B) 65 - 85 wt.% of one or more aliphatic ketones of the general formula II 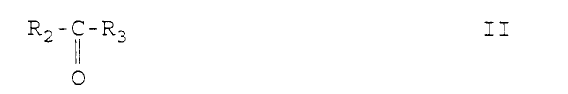 wherein R₂ = C₁₋₃ alkyl and R₃ = C₁₋₃ alkyl and R₂ and R₃ may be identical or different, wherein A) + B) add up to 100 wt.%, is used as the solvent mixture.

2. A process according to Claim 1, characterised in that methyl diglycol and/or butyl diglycol is used as component A.

3. A process according to Claim 1 or 2, characterised in that acetone and/or methyl ethyl ketone is used as component B.

4. A process according to one of Claims 1 to 3, characterised in that equipment soiled with residues of water-based lacquers is precleansed with water.

5. An equipment cleanser based on a solvent mixture for performing the process according to one of Claims 1 to 4, characterised in that it contains
A) 15 - 35 wt.% of one or more glycol ethers of the general formula I
OH-(CH₂-CH₂-O)ₘ-R₁ I
wherein R₁ = C₁₋₄ alkyl and m = 1 or 2 and
B) 65 - 85 wt.% of one or more aliphatic ketones of the general formula II 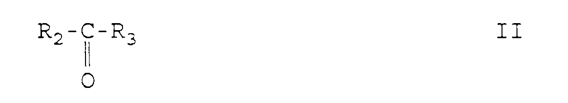 wherein R₂ = C₁₋₃ alkyl and R₃ = C₁₋₃ alkyl and R₂ and R₃ may be identical or different, wherein A) + B) add up to 100 wt.%.

6. An equipment cleanser according to Claim 5, characterised in that component A is methyl diglycol or butyl diglycol or a mixture of these.

7. An equipment cleanser according to Claim 5 or 6, characterised in that component B is acetone or methyl ethyl ketone or a mixture of these.

## Revendications

1. Procédé de nettoyage d'ustensiles salis par des restes de peinture, dans lequel les restes de peinture sont éliminés avec un mélange de solvants,
caractérisé en ce que l'on utilise, comme mélange de solvants, un mélange qui contient :
A) entre 15 % en poids et 35 % en poids d'un ou de plusieurs éthers de glycol de la formule générale I
OH - (CH₂ - CH₂ - O)ₘ - R₁ I
où les équations R₁ = C₁₋₄ - alkyle et m = 1 ou 2 sont importantes, et
B) entre 65 % en poids et 85 % en poids d'une ou de plusieurs cétones aliphatiques de la formule générale II 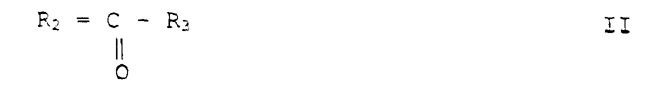 où les équations R₂ = C₁₋₃ - alkyle et R₃ = C₁₋₃ - alkyle sont importantes, les valeurs de R₂ et de R₃ pouvant être identiques ou différentes,
où A) + B) donnent un pourcentage égal à 100 % en poids.

2. Procédé selon la revendication 1, caractérisé en ce que l'on utilise, comme composant A, du diglycol de méthyle et/ou du diglycol de butyle.

3. Procédé selon la revendication 1 ou 2, caractérisé en ce que l'on utilise, comme composant B, de l'acétone et/ou de la méthyléthylcétone.

4. Procédé selon l'une quelconque des revendications 1 à 3, caractérisé en ce que des ustensiles salis par des restes de peinture à l'eau sont prénettoyés avec de l'eau.

5. Produit nettoyant d'ustensiles sur la base d'un mélange de solvants pour la réalisation du procédé selon l'une quelconque des revendications 1 à 4,
caractérisé en ce qu'il contient :
A) entre 15 % en poids et 35 % en poids d'un ou de plusieurs éthers de glycol de la formule générale I
OH - (CH₂ - CH₂ - O)ₘ - R₁ I
où les équations R₁ = C₁₋₄ - alkyle et m = 1 ou 2 sont importantes, et
B) entre 65 % en poids et 85 % en poids d'une ou de plusieurs cétones aliphatiques de la formule générale II 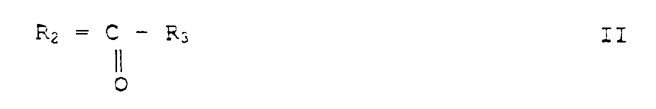 où les équations R₂ = C₁₋₃ - alkyle et R₃ = C₁₋₃ - alkyle sont importantes, les valeurs de R₂ et de R₃ pouvant être identiques ou différentes,
où A) + B) donnent un pourcentage égal à 100 % en poids.

6. Produit nettoyant d'ustensiles selon la revendication 5, caractérisé en ce que le composant A est du diglycol de méthyle ou du diglycol de butyle ou leur mélange.

7. Produit nettoyant d'ustensiles selon la revendication 5 ou 6, caractérisé en ce que le composant B est de l'acétone ou de la méthyléthylcétone ou leur mélange.
